Europäisches Patentamt

European Patent Office

Office européen des brevets

(11) Publication number: **0 188 837**
A1

# EUROPEAN PATENT APPLICATION

(21) Application number: **85202015.5**

(22) Date of filing: **04.12.85**

(51) Int. Cl.⁴: **B 60 J 7/04**

(30) Priority: **31.12.84 NL 8403977**

(43) Date of publication of application: **30.07.86**
**Bulletin 86/31**

(84) Designated Contracting States: **DE FR GB IT NL SE**

(71) Applicant: **Vermeulen-Hollandia Octrooien II B.V.,**
**Küppersweg 9-11, NL-2031 EA Haarlem (NL)**

(72) Inventor: **Boots, Robert Theodoor, Saeftinge 97,**
**NL-2036 GZ Haarlem (NL)**

(74) Representative: **de Vries, Johannes Hendrik Fokke et al,**
**Octrooibureau Los en Stigter B.V. P.O. Box 20052,**
**NL-1000 HB Amsterdam (NL)**

(54) **Mounting bracket.**

(57)    The invention relates to a mounting bracket (1) for mounting a frame (2) of an open roof construction to the fixed roof (3) of a vehicle, wherein this mounting bracket (1) is provided with a hole (5) for the passage of a bolt (11) for the connection to the fixed roof (3).

According to the invention the mounting bracket (1) can tiltably rest against the fixed roof (3) at the side of the bolt hole (5) facing away from the frame (2), and the connection between the mounting bracket (1) and the frame (2) allows a tilting of the mounting bracket (1).

Mounting bracket

The invention relates to a mounting bracket for mounting a frame of an open roof construction to the fixed roof of a vehicle, wherein this mounting bracket is provided with a hole for the passage of a bolt for the connection to the fixed roof.

In a known embodiment of such a mounting bracket this forms a rigid part of the frame of the open roof construction. The bolt can be screwed into a nut of a longitudinal section formed at the vehicle roof. The upper side of the frame is urged against the lower side of the fixed roof when this bolt is being tightened.

As a consequence of manufacturing tolerances of the vehicle it is possible that variations occur in the difference in the height between the location where the frame is in pressing contact with the fixed roof and the location where the mounting bracket is bolted to the longitudinal section. Hereby after pressing the frame against the fixed roof there should always be a space between the mounting bracket and the lower side of the longitudinal section. After the height of this space is measured the bolt is unscrewed again and spacer shims are brought into the space, whereupon the final mounting is executed. However, in this way the fixation of the known mounting bracket is digressive and time consuming.

It is an object of the present invention to provide a mounting bracket of the kind mentioned in the preamble, with which this disadvantage is removed in an effective way.

For this purpose the mounting bracket according to the invention is characterized in that the mounting bracket can tiltably rest against the fixed roof at the side of the bolt hole facing away from the frame, and the connection between the mounting bracket and the frame allows a tilting of the mounting bracket.

Because the mounting bracket can be tilted, it can always rest directly onto the longitudinal section, whilst the tilting compensates a variation in height between this support location and the location where the frame presses against the fixed roof. In this way a self-adjusting mounting bracket is formed, wherein only the bolt has to be tightened to obtain the desired fixation. The use of spacer shims can therefore be omitted.

The invention will hereafter be elucidated with reference to the drawings, which show an embodiment of the mounting bracket according to the invention.

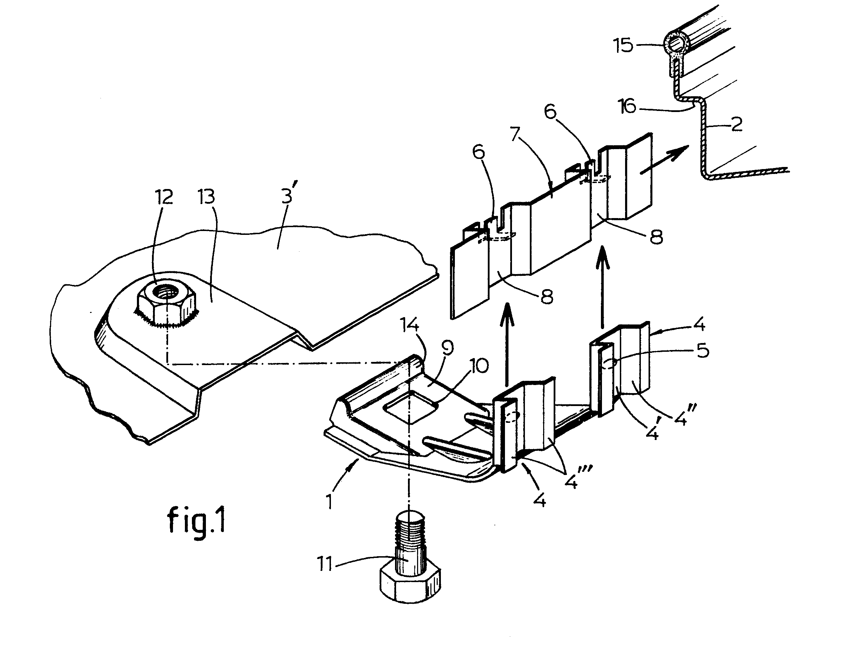

Fig. 1 is a perspective view of an embodiment of the mounting bracket according to the invention together with co-operating elements.

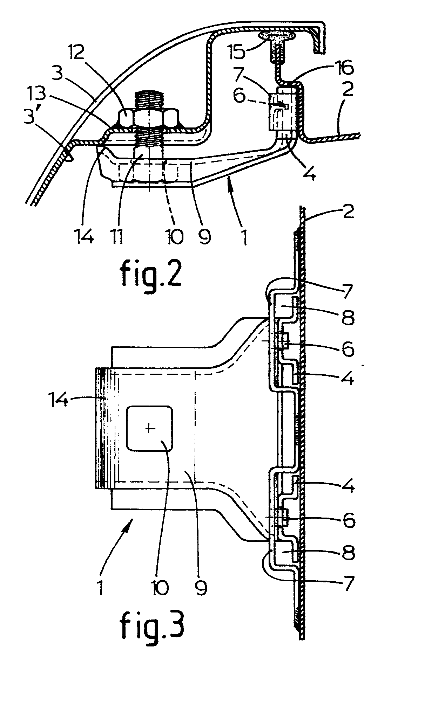

Fig. 2 is a side view of the mounting bracket of fig. 1 in the assembled condition.

Fig. 3 is a plan view of the mounting bracket of fig. 2.

The drawings show an embodiment of a mounting bracket 1 connecting a frame 2 of an open roof construction which is not further shown to a longitudinal section 3' extending at either side of the fixed roof 3 of a vehicle. In practice the longitudinal section 3' is often indicated as "cant rail". In general each side of the frame 2 is mounted to the respective longitudinal section 3' by means of two mounting brackets 1. Furthermore, an additional connection to the fixed roof 3 is provided at the front side of the frame 2 by means of centering brackets (not shown).

At the end of the mounting bracket 1 co-operating with the frame 2 two upwardly extending omega-sections 4 are formed, each having a web section 4', legs 4" and side sections 4"'. Each web section 4' has a hole 5 in which a lug 6 can engage, the lug being part of a section 7 mounted to the frame 2 and forming two chambers 8 together with the frame.

Prior to inserting the open roof construction into the vehicle the omega-sections 4 of each mounting bracket 1 are slid into the chambers 8 lying between the frame 2 and

0188837

and the section 7, whereupon the lugs 6 are bend and are accommodated in the holes 5 with clearance. The omega-sections 4 fit with clearance in the chambers 8 and the lugs 6 prevent the mounting bracket 1 from falling out. The sections 7 are disposed at a small distance below a flange 16 of the frame 2.

The substantially flat portion 9 of the mounting bracket 1 is provided with a hole 10, through which a bolt 11 can be inserted. The bolt 11 fits loosely in the hole 10, so that the mounting bracket 1 can be adjusted slightly with respect to the longitudinal section 3'. On a platform 13 formed in the longitudinal section 3' a nut 12 is fixed in which the bolt 11 can be screwed to connect the mounting bracket 1 to the fixed roof 3.

At the end near the bolt hole 10 the mounting bracket 1 carries an upwardly projecting transverse rib 14, with which in the assembled situation the mounting bracket 1 rests against the lower side of the longitudinal section 3' outwardly of the platform 13.

The mounting of the open roof construction to the fixed roof 3 by means of a number of mounting brackets 1 provided at either side of the frame 2 takes place in the following way:

At first the frame 2 of the open roof construction is pressed against the lower side of the fixed roof 3 of the vehicle. Herein a profile 15 of rubber provided on the upper edge of the frame 2 is deformed against the lower side of the fixed roof 3 in order to form a watertight sealing.

The mounting brackets 1 which already hang on the frame 2 are thereupon connected to the longitudinal sections 3' by screwing the bolts 11 into the nuts 12. The frame 2 then rests with the flange 16 on the upper edge protruding above the section 7.

At the final tightening of the bolts 11 the mounting brackets 1 tilt slightly about their ribs 14, and the omega-sections 4 press the frame 2 through the flange 16 into the definite position against the lower side of the fixed roof 3.

The invention is not restricted to the embodiment

0188837

shown in the drawing by way of example, which can be varied
in various ways within the scope of the invention.

0188837

## C L A I M S

1. Mounting bracket for mounting a frame of an open roof construction to the fixed roof of a vehicle, wherein this mounting bracket is provided with a hole for the passage of a bolt for the connection to the fixed roof, c h a r a c t e r i z e d  in that the mounting bracket can tiltably rest against the fixed roof at the side of the bolt hole facing away from the frame, and the connection between the mounting bracket and the frame allows a tilting of the mounting bracket.

2. Mounting bracket according to claim 1, c h a r a c t e r i z e d  in that it is tiltable about a rib formed at the end of the mounting bracket, which faces away from the frame.

3. Mounting bracket according to claim 1 or 2, c h a r a c t e r i z e d  in that it has at least one upstanding wall portion at the end facing away from the rib, the upstanding wall portion can be placed in a chamber formed outwardly of the frame and can engage a flange of the frame with an edge which protrudes above the chamber.

4. Mounting bracket according to claim 3, c h a r a c t e r i z e d  in that its end facing away from the rib has two upstanding wall portions.

5. Mouting bracket according to claim 3 or 4, c h a r a c t e r i z e d  in that the (each) upstanding wall portion consists of an omega-section.

6. Mounting bracket according to claim 3, 4 or 5, c h a r a c t e r i z e d  in that the (each) upstanding wall portion is provided with a hole, in which a lug can engage with clearance, the lug being formed on the wall of the respective chamber.

7. Mounting bracket according to one of the claims 3-6, c h a r a c t e r i z e d  in that the chamber(s) lie(s) between the frame and a section fixed to the frame at a small distance below the flange.

fig.1

fig.2

fig.3

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 016 263 (REHMANN) <br> * Column 2, line 62 - column 3, line 9; figure 2 * | 1,2 | B 60 J 7/04 |
| Y | CH-A- 471 945 (FRANKE) <br> * Column 2, lines 12-19; figure 1 * | 1,2 | |
| A | DE-A-2 313 453 (WEBASTO) <br> * Page 2, lines 1-10; figure 2 * | 1 | |
| A | DE-C- 949 446 (WEBASTO) <br> * Page 2, lines 89-114; figure 2 * | 1 | |
| A | DE-B-1 078 455 (BAIER) <br> * Column 2, lines 39-43; figures 1,2 * | 1 | TECHNICAL FIELDS SEARCHED (Int. Cl.4) <br><br> B 60 J 7 |

The present search report has been drawn up for all claims

| Place of search | Date of completion of the search | Examiner |
|---|---|---|
| THE HAGUE | 09-04-1986 | AYITER I. |